Europäisches Patentamt

European Patent Office

Office européen des brevets

(11) Veröffentlichungsnummer: **0 183 957**
**B1**

(12) **EUROPÄISCHE PATENTSCHRIFT**

(45) Veröffentlichungstag der Patentschrift:
**24.05.89**

(21) Anmeldenummer: **85113414.8**

(22) Anmeldetag: **22.10.85**

(51) Int. Cl.⁴: **H 02 H 3/33**

(54) **Differenzstromschutzschalter.**

(30) Priorität: **07.11.84 DE 3440723**

(43) Veröffentlichungstag der Anmeldung:
**11.06.86 Patentblatt 86/24**

(45) Bekanntmachung des Hinweises auf die Patenterteilung:
**24.05.89 Patentblatt 89/21**

(84) Benannte Vertragsstaaten:
**DE FR GB IT**

(56) Entgegenhaltungen:
**EP-A- 0 069 655**
**FR-A- 2 416 580**

(73) Patentinhaber: **Siemens Aktiengesellschaft Berlin und München, Wittelsbacherplatz 2, D-8000 München 2 (DE)**

(72) Erfinder: **Harr, Dieter, Friedrich-Ebert-Strasse 63, D-8400 Regensburg (DE)**
Erfinder: **Beck, Wolfgang, Friedrich-Bauer-Strasse 25, D-8520 Erlangen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft einen Differenzstromschutzschalter mit einer Transduktorschaltung, deren Sekundärwicklung mit einem Messwiderstand in Serienschaltung an einen Taktgenerator, der über eine Gleichrichterschaltung mit dem Netz in Verbindung steht, angeschlossen ist, wobei an einem Abgriff zwischen Sekundärwicklung und Widerstand eine Auswerteschaltung für Spannungsimpulse angeschlossen ist, die mit einer Auslöseeinrichtung in Verbindung steht, die über ein Schaltschloss auf Schaltkontakte in den zu überwachenden Leitungen einwirkt. Ein solcher Differenzstromschutzschalter ist durch die EP-A-69655 bekannt geworden. Hierbei prägt der Generator der Sekundärwicklung eines Ringkernwandlers über den Widerstand einen konstanten, hochfrequenten Strom ein. Spannungsänderungen an der Sekundärwicklung durch Änderung der magnetischen Eigenschaften des Ringkerns infolge eines Fehlerstroms werden von der Auswerteschaltung erfasst.

Ein derartiger Differenzstromschutzschalter ist auch durch die DE-A-34 29 381 vorgeschlagen worden, die jedoch nach dem Anmeldetag der vorliegenden Anmeldung veröffentlicht wurde. Hierbei besteht der Widerstand aus einem komplexen, überwiegend kapazitiven Widerstand. Es wird dann, wenn auf der Primärseite der Transduktorschaltung ein Differenzstrom auftritt, der induktive Widerstand der Sekundärwicklung kleiner, die Stromstärke grösser und sonach auch die Spannung am komplexen Widerstand grösser. Bei Erreichen einer in der Auswerteschaltung vorgegebenen Spannungsschwelle werden die Schaltkontakte in den zu überwachenden Leitungen geöffnet.

Derartige Differenzstromschutzschalter arbeiten in einem Leitungsnetz mit sehr grossen Leitungslängen aufgrund der hohen Leitungskapazitäten nicht sicher genug.

In einem elektrischen Niederspannungsnetz mit induktiven Verbrauchern treten in Verbindung mit Leitungskapazitäten bei Schalthandlungen Ausgleichsschwingungen auf, deren Frequenzen von den geschalteten Verbrauchern und der Art und Länge der Zuleitungen zu diesen Verbrauchern abhängen. Dadurch werden im Sekundärkreis Schwingungspakete mit Frequenzen ab ca. 1 kHz bis in den MHz-Bereich, im weiteren kurz «Störfrequenz» genannt, erzeugt, die wie ein Differenzstrom wirken und den Differenzstromschutzschalter auslösen. Derartige Fälle können hauptsächlich in grossen Gebäuden wie Industrieanlagen, Krankenhäusern oder Bürogebäuden auftreten, falls induktive Verbraucher wie z.B. Leuchtstofflampen, Motoren oder Steuertransformatoren geschaltet werden. Eine vorhandene Filteranordnung aus der Induktivität der Sekundärwicklung, den parasitären Kapazitäten zwischen Primär- und Sekundärwicklung, dem Messwiderstand und dem Eingangswiderstand der Auswerteschaltung kann diese Störfrequenzen nicht herausfiltern.

Der Erfindung liegt die Aufgabe zugrunde, einen Differenzstromschutzschalter mit einer Transduktorschaltung zu entwickeln, der durch Schwingungspakete mit diesen Störfrequenzen nicht ausgelöst wird.

Diese Aufgabe wird erfindungsgemäss durch die Merkmale des kennzeichnenden Teils des Anspruchs 1 ausgelöst.

Da eine Transduktorschaltung selbst schon Filtereigenschaften aufweist, soll der einzufügende Tiefpassfilter hier auch als Filterergänzung bezeichnet werden. Diese Filterergänzungen leiten die Schwingungspakete der Störfrequenz so ab, dass durch sie keine unerwünschte Auslösung bewirkt wird.

Als Filterergänzungen kommen Tiefpass-Zweipole infrage, die so gewählt sind, dass sie die Taktfrequenz des Taktgenerators nicht ableiten. Sonach bleibt gewährleistet, dass der Taktgenerator den Sekundärkreis steuern kann. Spannungen mit zu hoher Frequenz werden durch diese frequezabhängigen Bauelemente jedoch abgeleitet und es wird verhindert, dass der Differenzstromschutzschalter durch ein unerwünschtes Schwingungspaket ausgelöst wird.

Nach einer Weiterbildung ist vorgesehen, die Wirkung eines vorhandenen Ableitventiles für Stossströme zu sichern, indem als Tiefpass-Zweipole zwischen den Anschlussklemmen der Sekundärwicklung und Bezugspotential jeweils ein Kondensator und ein ohmscher Widerstand in Serie angeordnet sind. Dabei verhindern die ohmschen Widerstände, dass die Kondensatoren als Parallelschaltung zur Sekundärwicklung mit dieser als fast ungedämpfter Schwingkreis wirken, wodurch die Stossstromfestigkeit nicht mehr gegeben wäre.

Eine weitere Ausgestaltung zur Verbesserung der Störempfindlichkeit sieht vor, dass zwischen Mittelpunktleiter und Bezugspotential ein weiterer Kondensator angeordnet ist. Über diesen Kondensator können Störschwingungspakete vom Bezugspotential zum Mittelpunktleiter abgeleitet werden.

Mit der Erfindung wird der Vorteil erzielt, dass ein Differenzstromschutzschalter mit einer Transduktorschaltung durch Störimpulse der Störfrequenzen, wie sie in sehr langen Leitungsnetzen auftreten, nicht ausgelöst werden kann.

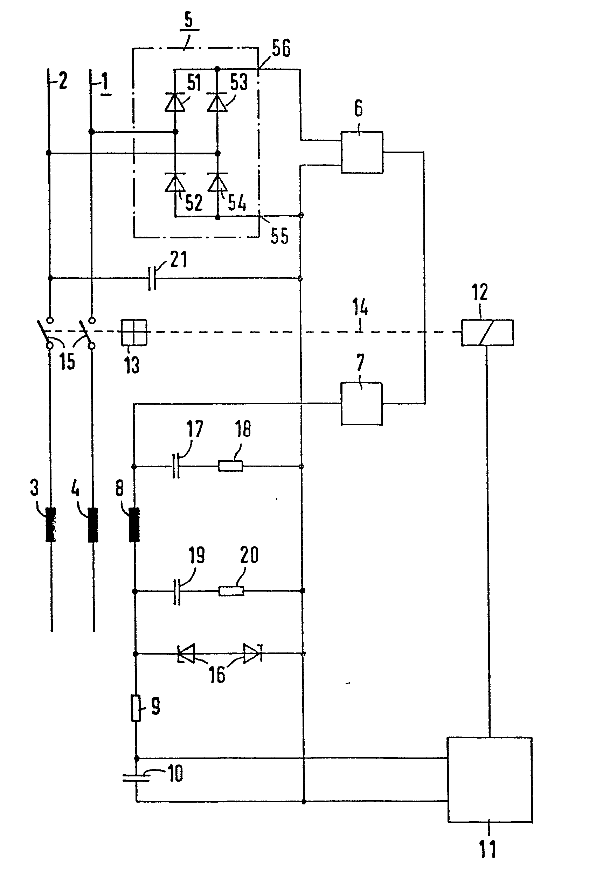

Die Erfindung soll anhand eines in der Zeichnung grob schematisch wiedergegebenen Ausführungsbeispieles näher erläutert werden:

Die Zeichnung veranschaulicht einen Differenzstromschutzschalter mit einer Transduktorschaltung und zwei Tiefpassfiltern zum Ableiten der Störfrequenzen.

Der Differenzstromschutzschalter nach der Zeichnung überwacht einen Aussenleiter 1 und einen Mittelpunktsleiter 2, die jeweils eine Primärwicklung 3 und 4 des Steuerkreises einer Transduktorschaltung enthalten. Die Primärwicklungen 3 und 4 können eine blosse Durchführung des Aussenleiters 1 und des Mittelpunktleiters 2 durch einen Summenstromwandler sein.

Mit Abgriffen am Aussenleiter 1 und am Mittelpunktleiter 2 ist eine Gleichrichteranordnung 5 verbunden, die aus vier Dioden 51 bis 54 aufgebaut ist. An ihrem ersten Ausgang 55 steht ein Bezugspotential an und an ihrem zweiten Ausgang 56 wird ein gleichgerichtetes Potential abgegeben. Dieser zweite Ausgang 56 steht über ein Stabilisierungsglied 6 mit einem Taktgenerator 7 in Verbindung.

Der Ausgang des Taktgenerators 7 ist mit einer ersten Anschlussklemme einer Sekundärwicklung 8 der Transduktorschaltung verbunden und die zweite Anschlussklemme der Sekundärwicklung 8 steht über einen ohmschen Dämpfungswiderstand 9 und einen komplexen, überwiegend kapazitiven Widerstand 10 in Serienschaltung mit Bezugspotential in Verbindung.

Mit einem Abgriff zwischen dem Dämpfungswiderstand 9 und dem komplexen Widerstand 10 ist ein erster Anschluss einer Auswerteschaltung 11 verbunden, deren zweiter Anschluss an Bezugspotential liegt. Der Ausgang der Auswerteschaltung 11 steht mit einer Auslöseeinrichtung 12 in elektrischer Verbindung. Diese Auslöseeinrichtung 12 steht mit einem Schaltschloss 13 in Eingriffverbindung 14, das auf Schaltkontakte 15 in den zu überwachenden Leitungen 1 und 2 wirkt.

Mit einem Abgriff zwischen der Sekundärwicklung 8 und dem ohmschen Dämpfungswiderstand 9 stehen als elektronisches Ventil zwei gegenpolig in Serie geschaltete Zenerdioden 16 in Verbindung, deren zweite Anschlussklemme mit Bezugspotential verbunden ist. Die Zenerdioden 16 begrenzen die Impulshöhe der im Sekundärkreis induzierten Spannungsimpulse, wenn diese infolge von Stromstössen im Netz, also im Primärkreis, einen durch die Auswahl der Zenerdioden 16 festgelegten Betrag übersteigt.

Mit den Anschlussklemmen der Sekundärwicklung 8 sind jeweils Filterergänzungen 17, 18 und 19, 20 verbunden, deren zweite Anschlussklemmen mit Bezugspotential verbunden sind. Diese Filterergänzungen 17, 18 und 19, 20, die jeweils aus einem Kondensator 17, 19 in Serienschaltung mit einem ohmschen Widerstand 18, 20 bestehen, koppeln Schwingungen der Störfrequenzen aus. Solche Frequenzen können beim Schalten einer induktiven Last in einem Netz mit verschiedenen Leitungslängen auftreten. Der Differenzstromschutzschalter wird sonach durch derartige Schwingungspakete nicht ausgelöst und auch seine Stossstromfestigkeit wird nicht geschmälert.

Ein Kondensator 21 zwischen einem Abgriff am Bezugspotential und einem Abgriff am Mittelpunktleiter 2 leitet nach einer Weiterbildung mögliche höherfrequente Schwingungen des Bezugspotentials zum Mittelpunktleiter hin ab.

Liste der Bezugszeichen
1 Aussenleiter
2 Mittelpunktleiter
3 Primärwicklung im Mittelpunktleiter
4 Primärwicklung im Aussenleiter
5 Gleichrichteranordnung
6 Stabilisierungsglied
7 Taktgenerator
8 Sekundärwicklung
9 ohmscher Dämpfungswiderstand
10 komplexer Widerstand
11 Auswerteschaltung
12 Auslöseeinrichtung
13 Schaltschloss
14 Eingriffverbindung
15 Schaltkontakte
16 Zenerdioden
17 Kondensator der ersten Filterergänzung
18 ohmscher Widerstand der ersten Filterergänzung
19 Kondensator der zweiten Filterergänzung
20 ohmscher Widerstand der zweiten Filterergänzung
21 Kondensator zwischen Mittelpunktleiter und Bezugspotential
51 erste Diode der Gleichrichteranordnung
52 zweite Diode der Gleichrichteranordnung
53 dritte Diode der Gleichrichteranordnung
54 vierte Diode der Gleichrichteranordnung
55 erster Ausgang der Gleichrichteranordnung
56 zweiter Ausgang der Gleichrichteranordnung

**Patentansprüche**

1. Differenzstromschutzschalter mit einer Transduktorschaltung, deren Sekundärwicklung (8) mit einem Messwiderstand (10) in Serienschaltung an einen Taktgenerator (7), der über eine Gleichrichterschaltung (5) mit dem Netz in Verbindung steht, angeschlossen ist, wobei an einem Abgriff zwischen Sekundärwicklung (8) und Widerstand (10) eine Auswerteschaltung (11) für Spannungsimpulse angeschlossen ist, die mit einer Auslöseeinrichtung (12) in Verbindung steht, die über ein Schaltschloss (13) auf Schaltkontakte (15) in den zu überwachenden Leitungen (1 und 2) einwirkt, dadurch gekennzeichnet, dass der Messwiderstand (10) ein komplexer, überwiegend kapazitiver Widerstand ist und dass zwischen jeder der beiden Anschlussklemmen der Sekundärwicklung (8) und Bezugspotential jeweils ein Tiefpassfilter (17, 18 und 19, 20) angeordnet ist.

2. Differenzstromschutzschalter nach Anspruch 1, dadurch gekennzeichnet, dass als Tiefpassfilter (17, 18 und 19, 20) zwischen den Anschlussklemmen der Sekundärwicklung (8) und Bezugspotential Tiefpass-Zweipole angeordnet sind, deren Wirkung oberhalb der Frequenz des Taktgenerators (7) liegt.

3. Differenzstromschutzschalter nach Anspruch 2, dadurch gekennzeichnet, dass ein elektronisches Ventil (16), dessen erste Anschlussklemme mit einem Abgriff zwischen der Sekundärwicklung (8) und der Auswerteschaltung (11) in Verbindung steht und dessen zweite Anschlussklemme an Bezugspotential liegt, vorgesehen ist und dass zwischen jeder der beiden Anschlussklemmen der Sekundärwicklung (8) und Bezugspotential als Tiefpass-Zweipol jeweils ein Kondensator (17, 19) und ein ohmscher Widerstand (18, 20) in Serie angeordnet sind.

4. Differenzstromschutzschalter nach einem der Ansprüche 1 bis 3, dadurch gekennzeichnet, dass zwischen dem Bezugspotential und dem Mittelpunktleiter (2) ein weiterer Kondensator (21) angeordnet ist.

## Revendications

1. Disjoncteur de protection à courant différentiel comportant un circuit transducteur, dont l'enroulement secondaire (8) est relié à une résistance de mesure (10) branchée en série avec un générateur de cadence (7) qui est relié au réseau par l'intermédiaire d'un circuit redresseur (5), et dans lequel à une prise située entre l'enroulement secondaire (8) de la résistance (10) se trouve raccordé un circuit d'évaluation (11) pour des impulsions de tension, qui est relié à un dispositif de déclenchement (12) qui agit, par l'intermédiaire d'un verrou de maintien (13), sur des contacts de commutation (15) situés dans les lignes (1 et 2) à contrôler, caractérisé par le fait que la résistance de mesure (10) est une résistance complexe, capacitive dans une large mesure, et que des filtres passe-bas respectifs (17, 18 et 19, 20) sont disposés entre chacune des deux bornes de raccordement de l'enroulement secondaire (8) et un potentiel de référence.

2. Disjoncteur de protection à courant différentiel suivant la revendication 1, caractérisé par le fait qu'entre les bornes de raccordement de l'enroulement secondaire (8) et le potentiel de référence se trovent disposés, en tant que filtres passe-bas (17, 18 et 19, 20), des dipôles formant filtres passe-bas, dont l'action se situe au-dessus de la fréquence du générateur de cadence (7).

3. Disjoncteur de protection à courant différentiel suivant la revendication 2, caractérisé par le fait qu'il est prévu une valve électronique (16), dont la première borne de raccordement est reliée à une prise située entre l'enroulement secondaire (8) et le circuit d'évaluation (11) et dont la seconde borne est placée au potentiel de référence, et qu'il est prévu, en tant que dipôle formant filtre passe-bas, respectivement un condensateur (17, 19) et une résistance ohmique (18, 19) branchés en série et disposés entre chacune des deux bornes de raccordement de l'enroulement secondaire (8) et le potentiel de référence.

4. Disjoncteur de protection à courant différentiel suivant l'une des revendications 1 à 3, caractérisé par le fait qu'un condensateur supplémentaire (21) est disposé entre le potentiel de référence et le conducteur neutre (2).

## Claims

1. Residual-current circuit breaker with a transductor circuit, whose secondary winding (8) is connected in series with a measuring impedance (10) to a clock generator (7) which is connected via a rectifier circuit (5) to the power supply system, wherein an evaluating circuit (11) for voltage pulses is connected to a pick-off between secondary winding (8) and impedance (10), the evaluating circuit being connected to a tripping device (12) which acts via a latching mechanism (13) on switch contacts (15) in the lines to be monitored (1 and 2), characterised in that the measuring impedance and in that, between each of the two terminals of the secondary winding (8) and reference potential there is arranged a respective low-pass filter (17, 18 and 19, 20).

2. Residual-current circuit breaker according to claim 1, characterised in that as low-pass filters (17, 18 and 19, 20) between the terminals of the secondary winding (8) and reference potential there are arranged low-pass two-terminal networks, the action of which lies above the frequency of the clock generator (7).

3. Residual-current circuit breaker according to claim 2, characterised in that an electronic valve (16) whose first terminal is connected to a pick-off between the secondary winding (8) and the evaluating circuit (11) and whose second terminal is connected to reference potential is provided and in that a capacitor (17, 19) and an ohmic resistor (18, 20) are arranged in series in each case between each of the two terminals of the secondary winding (8) and reference potential as low-pass two-terminal network.

4. Residual-current circuit breaker according to one of claims 1 to 3, characterised in that a further capacitor (21) is arranged between the reference potential and the neutral conductor (2).